# EUROPEAN PATENT APPLICATION

(11) **EP 4 184 415 A1**
(43) Date of publication of application: **24.05.2023**
(21) Application number: 22202716.1
(22) Date of filing: 20.10.2022
(51) Int. Cl.: G06Q 30/06, G06Q 10/087, G06Q 20/20, G06Q 20/32

(54) **METHOD FOR ORDER PROCESSING AND SYSTEM THEREOF**

(30) Priority: 23.11.2021 HK 32021042882
(71) Applicant: Dola Technology Limited, Pak Shek Kok, N.T. (HK)
(72) Inventor: GAO, Xuda, Kowloon (HK); ZHENG, Zitao, Kowloon (HK)
(74) Representative: Isern Patentes y Marcas S.L.

(57) **Abstract**

An order processing system includes: sales terminal, server, database, printer, customer terminal and third-party payment platform. Through the mutual cooperation between various devices of the system, it can support Payment-first process and Payment-later process. In addition, it also provides a variety of payment modes for customers to choose, so as to improve the user experience.

## Description

### TECHNICAL FIELD

The present application relates to information technologies, and, in particular embodiments, to a method for order processing and system thereof.

### BACKGROUND

The current food ordering and checkout process of the restaurant POS (point of sale) platform usually follows the below method and system design:

During the ordering process, the waiter places an order directly at the POS terminal, or let consumers scan the QR code to place the order by themselves.

During the checkout process, the waiter checks out all at one time, or pay bills divided by the dishes at the POS terminal, or let consumers scan the QR code and then checkout all at one time without other options such as checkout by shares or dishes

However, the ordering and checkout process described above have some defects, such as the inventory data cannot be unified, and the checkout process of the same order may be executed on different terminal, which is difficult to meet the needs of actual use.

### SUMMARY

In accordance with an embodiment, the method for order processing includes: activating at least one order on the sales terminal to enter a food selection process or an order payment process; selecting at least one food during the food selection process; determining whether an inventory quantity of the food is sufficient; adding the food to the order when the inventory quantity is sufficient; prohibiting the food added to the order and indicating to reselect the food or abandon the target food when the inventory quantity is not sufficient; entering the order payment process in response to the payment of the order is necessary to complete before food preparation; sending the selected food information to the food production department and updating the inventory quantity of the target food, in response to the payment of the order is not necessary to complete before food preparation; entering the order payment process when the payment instruction is received.

In accordance with another embodiment, the system for order processing includes: several sales terminals, configured to activate at least one order to enter a food selection process or an order payment process and select at least one food during the food selection process; several servers, configured to determine whether an inventory quantity of the food is sufficient; add the food to the order when the inventory quantity is sufficient; prohibit the food added to the order and indicating to reselect the food or abandon the target food when the inventory quantity is not sufficient; enter the order payment process in response to the payment of the order is necessary to complete before food preparation; sending the selected food information to the food production department and update the inventory quantity of the target food, and enter the order payment process when the payment instruction is received, in response to the payment of the order is not necessary to complete before food preparation; a data base, configured to store the inventory quantity; a printing device arranged in the food production department, configured to show the received food information.

An advantage of a preferred embodiment of the present disclosure is that the method and system for order process achieve unified management of orders and inventory and provide different checkout methods at the same time, such that the efficiency of the order processing has been increase and the user experience in the checkout process has been improved.

The foregoing has outlined rather broadly the features and technical advantages of the present application in order that the detailed description of the application that follows may be better understood. Additional features and advantages of the application will be described hereinafter which form the subject of the claims of the application. It should be appreciated by those skilled in the art that the conception and specific embodiment disclosed may be readily utilized as a basis for modifying or designing other structures or processes for carrying out the same purposes of the present application. It should also be realized by those skilled in the art that such equivalent constructions do not depart from the spirit and scope of the application as set forth in the appended claims.

### BRIEF DESCRIPTION OF THE DRAWINGS

For a more complete understanding of the present disclosure, and the advantages thereof, reference is now made to the following descriptions taken in conjunction with the accompanying drawings, in which:
Figure 1 illustrates schematic diagram of a system for order processing in accordance with various embodiments of the application;
Figure 2a illustrates flow chart diagram of a method for order processing implemented by the sales terminal in accordance with various embodiments of the application;
Figure 2b illustrates flow chart diagram of the method for determining whether the sales terminal enters the food selection process in accordance with various embodiments of the application;
Figure 3 illustrates flow chart diagram of the order payment process implemented by the sales terminal in accordance with various embodiments of the application;
Figure 4 illustrates flow chart diagram of the method for order process implemented by the customer terminal in accordance with various embodiments of the application;
Figure 5 illustrates flow chart diagram of the method for order process implemented by the customer terminal in accordance with other embodiments of the application;
Figure 6 illustrates flow chart diagram of the order payment process implemented by the customer terminal in accordance with various embodiments of the application;
Figure 7a illustrates flow chart diagram of a payment mode in accordance with various embodiments of the application;
Figure 7b illustrates flow chart diagram of another payment mode in accordance with various embodiments of the application;
Figure 7c illustrates flow chart diagram of still another payment mode in accordance with various embodiments of the application.

### DETAILED DESCRIPTION OF ILLUSTRATIVE EMBODIMENTS

The making and using of the presently preferred embodiments are discussed in detail below. It should be appreciated, however, that the present application provides many applicable inventive concepts that can be embodied in a wide variety of specific contexts. The specific embodiments discussed are merely illustrative of specific ways to make and use the disclosure, and do not limit the scope of the disclosure.

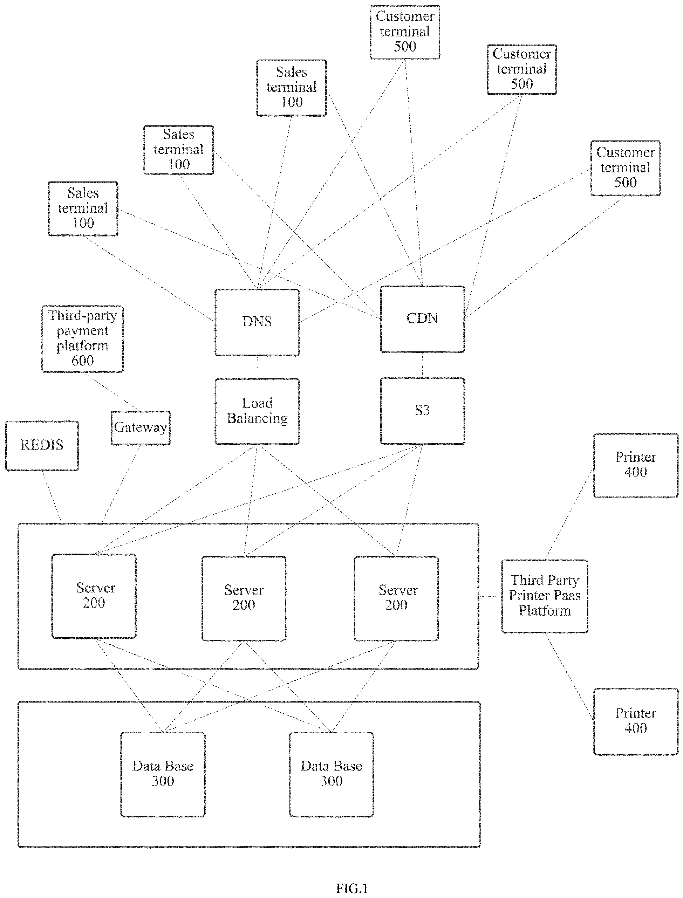

Refer to Fig. 1, which is a structural diagram of the system for order processing according to the embodiment of the present application. The system may include a sales terminal 100, a server 200, a database 300 and a printer 400.

The sales terminal 100 can be implemented by any suitable type of dedicated electronic terminal (such as tablet computer, laptop computer, smartphone) controlled by a similar seller such as a waiter. The sales terminal 100 further includes keys, displays or other suitable types of interactive devices for interaction with waiters. The attendant can input the user's needs into the sales terminal 100 through corresponding instructions according to the results of communication with the user.

The server 200 is an electronic information processing platform for providing logic analysis and data processing functions. It can be a server cluster or other suitable server form. The server 200 can receive data information from an external device (such as the sales terminal 100), execute data processing steps which is correspond to the built-in software program, and provide the data processing results to the external device

The database 300 can be implemented by any suitable form of functional module for storing data information. A communication connection is established between the server 200 and the database 300, and one or more data information such as food inventory can be stored in the database 300. The database 300 can provide search and editing functions so that the server 200 can quickly obtain data in the database 300 and update the data in time

The printing device 400 is arranged in a food production department (such as kitchen) and can display the food to be produced for the staff in the food production department. In some embodiments, it may be a printing device for printing out instruction information. In other embodiments, it may also be a display screen for presenting the instruction information to the staff.

In some embodiments, referring to Fig. 1, the system may also include customer terminal 500 and third-party payment platform 600.

The customer terminal 500 can be implemented by any type of electronic terminal device for daily use by the user, such as a smart phone and a smart wearable device. It can be controlled by the user and has one or more interactive devices (such as display screen, touch screen or speaker) to collect the control instructions sent by the user.

The third-party payment platform 600 is a functional module for realizing order payment. It can usually be an electronic settlement platform supported by banks or other relevant financial institutions for checking out the order and paying specific amount through the corresponding payment page.

In some embodiments, the number of sales terminals 100 and customer terminals 500 is unlimited. A typical application scenario of load balancing + caching is formed between the sales terminal 100 / customer terminal 500 and the server 200. DNS (Domain Name System), load balancing, CND (Content Delivery Network) and S3 module (Simple Storage Service) are arranged between the plurality of sales terminals 100 / customer terminals 500 and the server 200. The server 200 may be connected to the printing device 400 through a third-party print pass platform. The server 200 is also provided with the REDIS as a small cache database.

In operation, an application supported by the server 200 and the database 300 may be run on the sales terminal 100 / customer terminal 500. The waiter or customer can operate the application on the sales terminal 100 / customer terminal 500 and receive the feedback information of the application, so as to complete one or more steps of the order processing method.

It should be noted that the system shown in Fig. 1 is only used to explain the physical structure for implementing the order processing method according to the present application. On the basis of the order processing system shown in Fig. 1, those skilled in the art can also adjust, replace, add or omit the functional modules in the order processor system shown in Fig. 1 according to the needs of the actual situation, so as to obtain more embodiments.

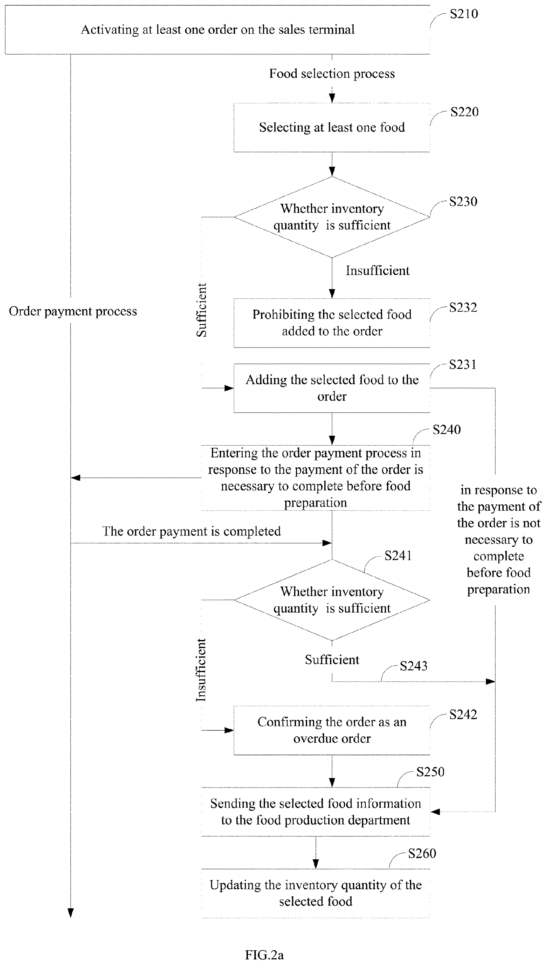

Refer to Fig. 2a, which is a flow-chart diagram of the method for order processing. The method includes:
S210: activating at least one order on the sales terminal to enter a food selection process or an order payment process.

The waiter can order or check out the order according to the user's needs, so as to enter the corresponding control instruction on the sales terminal to enter the corresponding food selection process or order payment process.

S220: selecting at least one food during the food selection process.

The waiter can select one or more foods that the user expects to order in any suitable way at the sales terminal.

S230: determining whether an inventory quantity of the selected food is sufficient.

S231: adding the selected food to the order when the inventory quantity is sufficient.

S232: prohibiting the selected food added to the order and indicating to reselect another food or abandon the selected food when the inventory quantity is insufficient.

When the inventory is insufficient, it indicates that the selected food has been sold out. The sales terminal can prompt the waiter that the food has been sold out in any appropriate form, and the waiter can choose to reselect another food or abundant the food according to the user's decision.

S240: entering the order payment process in response to the payment of the order is necessary to complete before food preparation.

Depending on the restaurant's business model, customers may need to pay for the food they order first (hereinafter referred to as payment-first- process) or after the meal (hereinafter referred to as payment-later- process). The method for order processing can support the payment-first- process and payment-later- process.

In some embodiments, referring to Fig. 2a, during the payment-first process, the order payment needs to take a certain time and the stock of food may change. Therefore, after the order payment is completed, the following steps need to be performed:
S241: determining whether the inventory quantity of the food is sufficient.
S242: when the inventory quantity is insufficient, confirming the order as an overdue order and indicating the food of the overdue order is insufficient.

When the inventory is insufficient, it can be prompted through the sales terminal that the food has been sold out and the selected food of the order cannot be made.

S243: when the inventory quantity is sufficient, sending the selected food information to the food production department and updating the inventory quantity of the target food.

In some embodiments, the inventory quantity of food can be calculated from the current inventory quantity minus the locked quantity plus the expired quantity. The current inventory quantity refers to the actual quantity currently available, the locked quantity refers to the quantity of food recorded by the order, and the expired quantity refers to the quantity of food recorded by the expired order. In this way, part of the locked quantity can be released again after the order expires, so that the inventory quantity of food can be adjusted in time.

S250: sending the selected food information to the food production department, in response to the payment of the order is not necessary to complete before food preparation.

The server 200 can provide the selected food information to the printing device located in the food production department (such as the kitchen). The printing equipment will print it out so that the staff of the food production department can make food according to the information.

S260: updating the inventory quantity of the selected food.

After the selected food information is provided to the food preparation department, it can be considered that the food can be prepared and the current inventory quantity of the corresponding food minus the exact number of the food in the order placed.

One of the advantages of the method according to the embodiment of the application is that it can support two modes: payment-later- process and payment-first process, so as to better meet the actual needs of different restaurants.

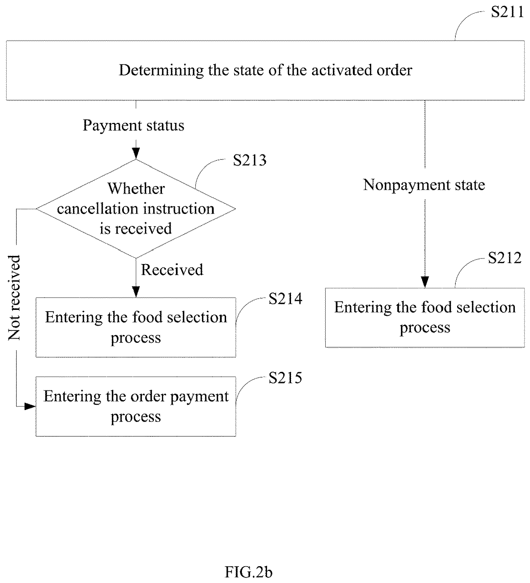

In some embodiments, after activating the order, appropriate process may be set to determine whether to enter the food selection process or the order payment process. Referring to Fig. 2b, the process is as follows:
S211: determining the state of the activated order.

The activated order refers to the specific order currently being processed by the waiter (such as the order of a table).

S212: entering the food selection process when the activated order is in a nonpayment state.

The nonpayment status means that the order is initially established and does not include the ordered food. It can be understood that in the case of initial establishment, customers generally need to order. Therefore, it should enter the food selection process when the activated order is in the nonpayment state.

S213: determining whether a cancellation instruction is received when the activated order is in a payment status.

Payment status refers to that the order already contains some ordered food that has been prepared. At this time, the activated order can be further determined whether the current order needs further ordering or payment.

S214: entering the food selection process when a cancellation instruction is received.

The Cancellation instruction refers to the instruction information for canceling payment. In this embodiment, the default operation is order payment process, during the payment status. The waiter can switch to enter the food selection process by entering the cancellation instruction on the sales terminal.

S215: entering the order payment process when the cancellation instruction is not received.

If the cancellation instruction is not received within the predefined time period, it is generally indicated that the completed order needs to be paid and should enter the order payment process.

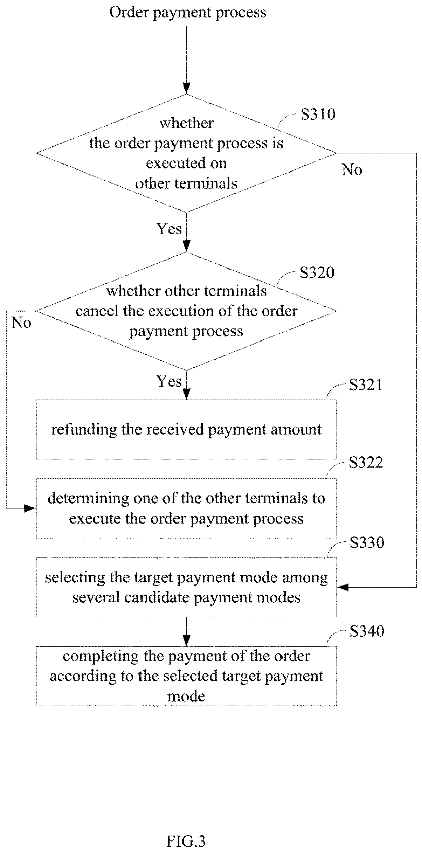

In some embodiments, when entering the order payment process, other sales terminals or customer terminals may also initiate the order payment process for the same order. Therefore, the following steps can be performed to prevent the order with repeated payment or conflicting problems. Referring to Fig. 3, the order payment process includes the following steps:
S310: determining whether the order payment process is executed on other terminals.
S320: in response to the order payment process is executed on other terminals, determining whether other terminals cancel the execution of the order payment process.

Although the order payment process is executed by other terminals, it may also be cancelled due to payment timeout or other reasons. Therefore, it is necessary to check again whether the order payment process cancel the execution.

S321: refunding the received payment amount when other terminals cancel the execution of the order payment process.

If the execution has been cancelled, the paid amount needs to be returned to the customer through the waiter to avoid repeated payment.

S322: determining one of the other terminals to execute the order payment process when the other terminals do not cancel the order payment process.

S330: in response to the order payment process is not executed on other terminals, selecting the target payment mode among several candidate payment modes.

The payment mode that meets the needs of customers can be selected at the sales terminal. "Payment mode" refers to the specific payment method for the order includes multiple foods. The waiter can select the target payment mode according to the needs of customers on the sales terminal.

S340: completing the payment of the order according to the selected target payment mode.

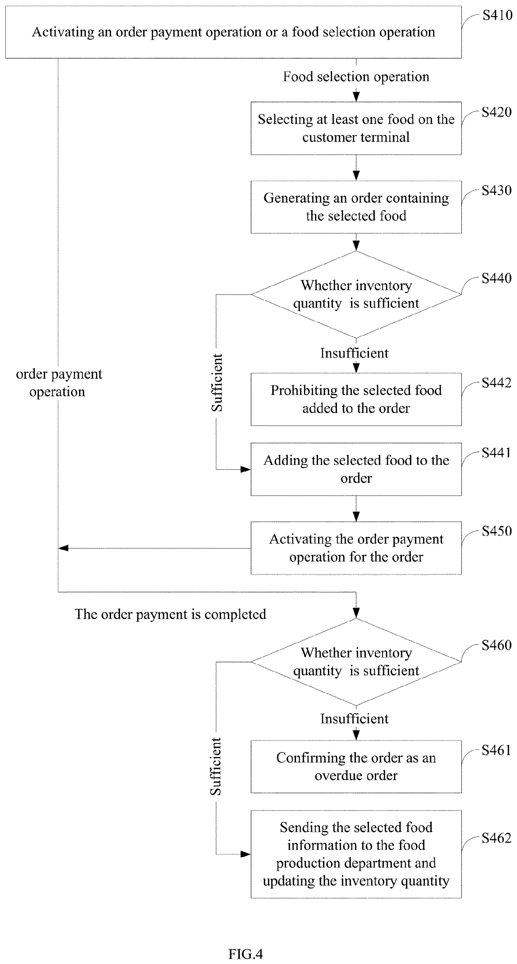

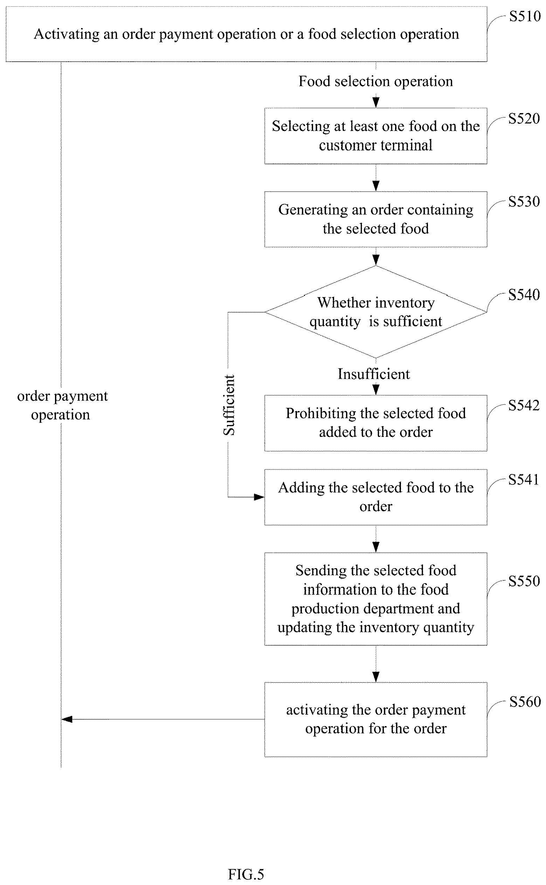

In some embodiments, referring to Figs. 4 and 5, the method for order processing can also be implemented by the customer terminal and the server. As shown in Fig. 4, the method based on the customer terminal includes:
S410: activating an order payment operation or a food selection operation when the customer terminal scans an QR code.

The customer terminal can perform corresponding payment operation or selection operation on the order by scanning the specific QR code or other similar identification code. In this embodiment, the order payment operation corresponds to the order payment process and the food selection operation corresponds to the food selection process. The different technical terms "operation" and "process" are only used to indicate that the process is executed on the different terminals.

S420: selecting at least one food on the customer terminal during the food selection operation.

In the food selection operation, the customer terminal can display the food to the user by presenting a menu, etc., and confirm the selected food according to the user's selection instruction.

S430: generating an order containing the selected food.

As the food selected by the user, the order corresponding to the table can be generated.

S440: determining whether the inventory quantity of the food is sufficient.

S441: adding the food to the order when the inventory quantity is sufficient.

S442: prohibiting the food added to the order and indicating to reselect the food or abandon the selected food when the inventory quantity is insufficient.

It is also necessary to detect the inventory of the selected food to ensure that the selected food can be made. Therefore, the food is added to the order only when the inventory is sufficient. When the inventory is insufficient, it may be need to prompt the user that the current food quantity is insufficient and let the user reselect or give up the food directly through any appropriate prompt message.

S450: activating the order payment operation for the order.

The embodiment of the application is the order processing method suitable for the restaurant operation mode of paying food expenses before meals (i.e., payment first process).

S460: determining whether the inventory quantity of the food is sufficient after the payment of the order is completed.

As described in the above embodiment, order payment takes a certain time. The amount of food in stock may change during this time period. Therefore, it is necessary to check the inventory of the selected food of the order again.

S461: when the inventory quantity is insufficient, confirming the order as an overdue order and indicating the food of the overdue order is insufficient.

S462: when the inventory quantity is sufficient, sending the selected food information to the food production department and updating the inventory quantity of the food.

When the inventory quantity is insufficient, the order can be determined as an overdue order and should be refund. When the inventory is sufficient, the order information can be sent to the food production department such as the staff of the kitchen to start prepare the food.

In some embodiments, referring to Fig.5, the method for order processing includes:
S510: activating an order payment operation or a food selection operation when the customer terminal scans an QR code.
S520: selecting at least one food on the customer terminal during the food selection operation.
S530: generating an order containing the selected food.
S540: determining whether the inventory quantity of the food is sufficient.
S541: adding the food to the order when the inventory quantity is sufficient.
S542: prohibiting the food added to the order and indicating to reselect the food or abandon the food when the inventory quantity is insufficient.
S550: sending the selected food information to the food production department and updating the inventory quantity of the food.
S560: activating the order payment operation for the order.

Compared with the order processing process shown in Fig. 4, the order processing process shown in Fig. 5 sends the food information of the order to the food production department such as the kitchen for production without order payment. The order payment operation can be activated by the payment instruction (such as scanning the QR code again). The order processing method shown in Fig. 5 is suitable for the Payment-later process.

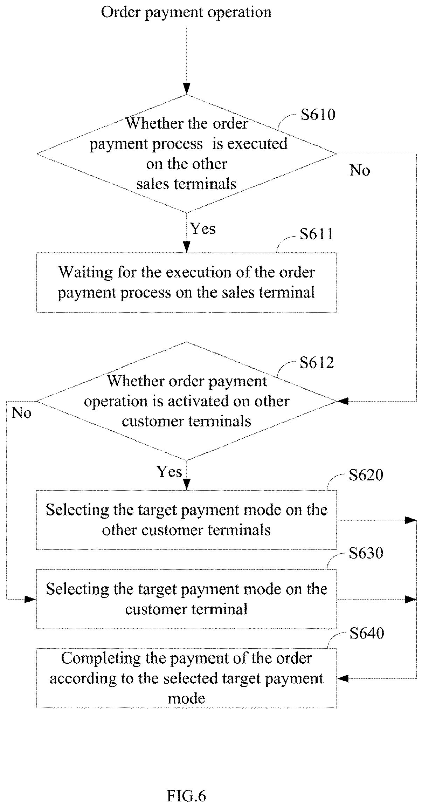

In some embodiments, similar to the order payment process executed by the sales terminal, the same order may also be executed in other terminals. Therefore, referring to Fig. 6, the order payment operation performed by the customer terminal includes following steps:
S610: determining whether the order payment process of the same order is executed on the other sales terminals.
S611: waiting for the execution of the order payment process on the sales terminal when the order payment process is executed on the other sales terminal.
S612: determining whether order payment operation is activated on other customer terminals.
S620: selecting the target payment mode on the other customer terminals when the order payment operation is activated on other customer terminals.
S630: selecting the target payment mode on the customer terminal when the order payment operation is not activated on other customer terminals or the other customer terminals do not select the target payment mode within the preset selection time.
S640: completing the payment of the order according to the selected target payment mode.

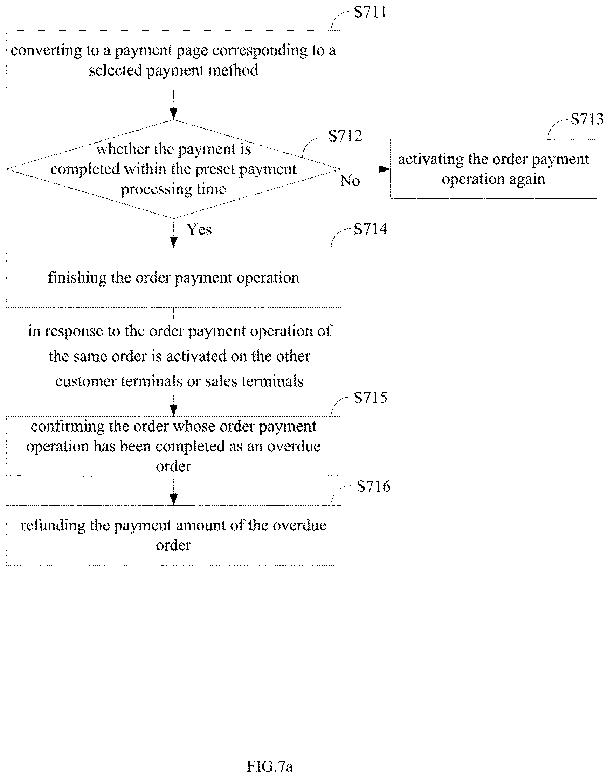

The order processing method according to the embodiment of the application provides a variety of different order payment modes to improve the customer's use experience. Different order payment modes are described in detail below in combination with Figs. 7a to 7c.

In some embodiments, refer to Fig. 7a. the order payment modes that can be called "Check out the full amount of the order" includes:
S711: converting to a payment page corresponding to a selected payment method.

The payment amount of the payment page is the total amount of the order. The payment page can be provided by a third-party payment platform. The terminal device can convert to the third-party payment platform which is corresponding to the payment method determined by the customer.

S712: determining whether the payment is completed within the preset payment processing time.

The preset payment processing time is a predefined time period. It can be defined according to the actual situation, such as 15 minutes. The customer needs to complete the payment within the payment processing time.

S713: activating the order payment operation again, when the payment is not completed within the preset payment processing time.

When the situation of the payment timeout occurs, it should return to step S610.

S714: finishing the order payment operation when the payment is completed within the preset payment processing time.

S715: in response to the order payment operation of the same order is activated on the other customer terminals or sales terminals, confirming the order whose order payment operation has been completed as an overdue order.

After the order has been paid, it is also necessary to determine whether other terminals have also initiated payment for the same order. Orders that have completed the order payment operation can be marked as expired orders to prevent the repeated charges.

S716: refunding the payment amount of the overdue order.

If the repeated charge occurs, the amount of the repeated charges can be refunded to the customer through the waiter or other suitable way.

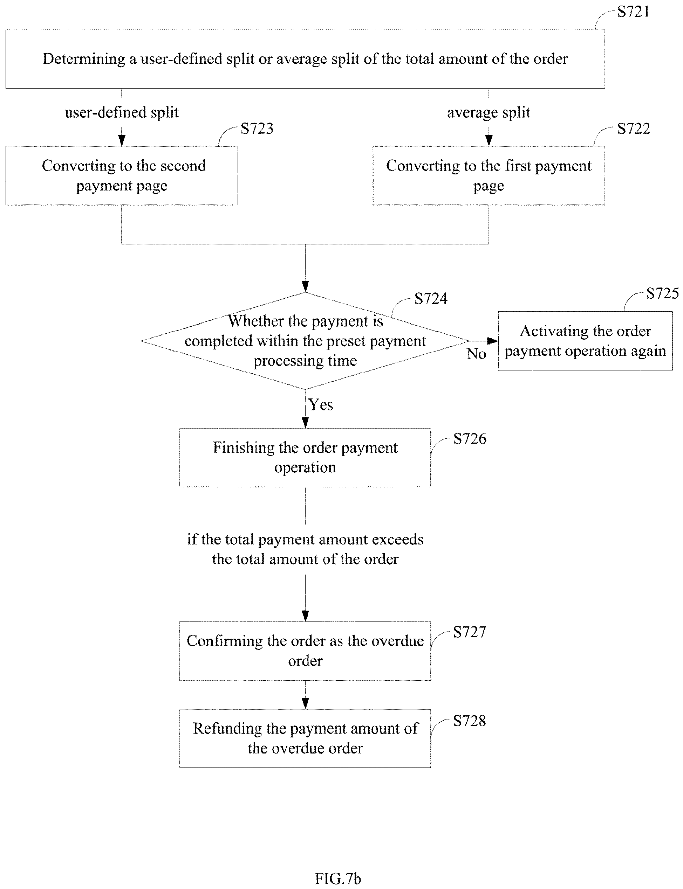

In some embodiments, refer to Fig. 7b. the order payment modes that can be called "Check out at average amount or customized amount of the order" includes:
S721: determining a user-defined split or average split of the total amount of the order.

The user-defined split means that payment amount can be defined by the user according to the preference of the user. The average split refers to dividing the total amount of the order into multiple parts according to the set quantity.

S722: converting to the first payment page corresponding to the selected payment method when the average split is determined.

The payment amount of the first payment page can be determined by dividing the total amount and average quantity of the order.

In some embodiments, when the quantity of the terminal has reached the set quantity, the server may refuse another terminal to join the order payment operation of the order.

S723: converting to the second payment page corresponding to the selected payment method when the user-defined split is determined.

The payment amount of the second payment page is an amount set by the user. The customer can set an appropriate amount between the total amount and zero as needed.

S724: determining whether the payment is completed within the preset payment processing time. It should be noted that the preset payment processing time can be based on the individual consumer terminal level.

S725: activating the order payment operation again, when the payment is not completed within the preset payment processing time.

S726: finishing the order payment operation when the payment is completed within the preset payment processing time.

S727: if the total payment amount paid by the terminal exceeds the total amount of the order confirming the order as the overdue order when the total payment amount exceeds the total amount of the order.

S728: refunding the payment amount of the overdue order.

The payment mode shown in Fig.7b facilitate multiple customers to split the payment amount arbitrarily that could provide the better use experience.

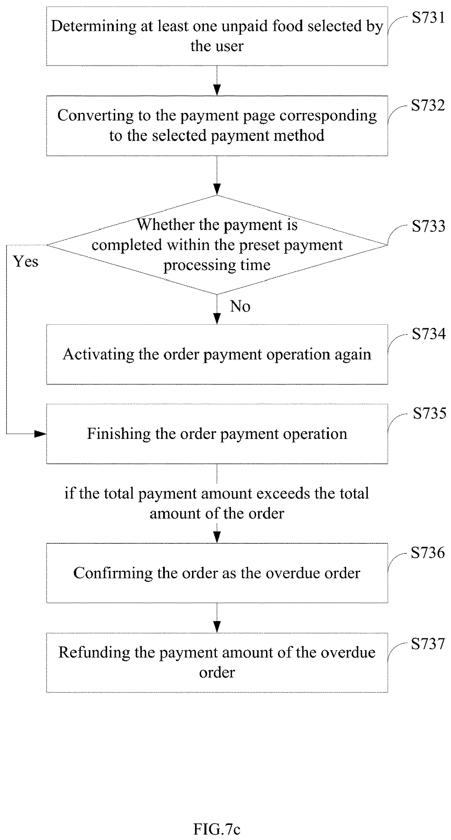

In some embodiments, refer to Fig. 7c. the order payment modes that can be called "Check out the amount of the selected dish" includes:

S731: determining at least one unpaid food selected by the user.

The customer terminal can present the food to be paid to the customer in a selection list or other appropriate form. The customer can select the food to be paid which he wants to pay in the customer terminal by pressing a key or touching.

S732: converting to the payment page corresponding to the selected payment method.

The payment amount of the payment page is the total price of the unpaid food selected by the user.

S733: determining whether the payment is completed within the preset payment processing time.

S734: activating the order payment operation again, when the payment is not completed within the preset payment processing time.

S735: finishing the order payment operation when the payment is completed within the preset payment processing time.

S736: if the total payment amount paid by the terminals exceeds the total amount of the order confirming the order as an overdue order when the total payment amount exceeds the total amount of the order.

S737: refunding the payment amount of the overdue order.

The payment mode shown in Fig.7c facilitate each customer to pay the bill separately when multiple customers jointly use one order, which is conducive to improving the user experience. The customer may easy to choose some dish in the order for payment.

In conclusion, the order processing system according to the embodiment of the application has strong compatibility. The system includes the customer terminals and sales terminals, and supports the Payment-first process and Payment-later process, which can well meet the actual use needs of different restaurants.

In addition, during the process of order payment, the order processing system provides a variety of payment modes for customers to choose. Customers can choose the payment mode that meets their needs according to the actual dining situation, and quickly complete the order payment, which greatly improves the user experience.

Although embodiments of the present application and its advantages have been described in detail, it should be understood that various changes, substitutions and alterations can be made herein without departing from the spirit and scope of the application as defined by the appended claims.

Moreover, the scope of the present application is not intended to be limited to the particular embodiments of the process, machine, manufacture, composition of matter, means, methods and steps described in the specification. As one of ordinary skill in the art will readily appreciate from the disclosure of the present application, processes, machines, manufacture, compositions of matter, means, methods, or steps, presently existing or later to be developed, that perform substantially the same function or achieve substantially the same result as the corresponding embodiments described herein may be utilized according to the present application. Accordingly, the appended claims are intended to include within their scope such processes, machines, manufacture, compositions of matter, means, methods, or steps.

## Claims

1. A method for order processing, comprising:
activating at least one order on the sales terminal to enter a food selection process or an order payment process;
selecting at least one food during the food selection process;
determining whether an inventory quantity of the selected food is sufficient;
adding the selected food to the order when the inventory quantity is sufficient;
prohibiting the selected food added to the order and indicating to reselect another food or abandon the selected food, when the inventory quantity is insufficient;
entering the order payment process in response to the payment of the order is necessary to complete before food preparation;
sending the selected food information to the food production department and updating the inventory quantity of the selected food, in response to the payment of the order is not necessary to complete before food preparation;
entering the order payment process when the payment instruction is received.

2. The method according to claim 1, wherein the order payment process comprises:
in response to the order payment process is executed on other terminals, determining whether other terminals cancel the execution of the order payment process;
refunding the received payment amount when other terminals cancel the execution of the order payment process;
determining one of the other terminals to execute the order payment process when the other terminals do not cancel the order payment process;
in response to the order payment process is not executed on other terminals, selecting the target payment mode among several candidate payment modes;
completing the payment of the order according to the selected target payment mode.

3. The method according to claim 2, further comprising:
determining whether the inventory quantity of the food is sufficient, after the payment of the order is completed;
when the inventory quantity is insufficient, confirming the order as an overdue order and indicating the food of the overdue order is insufficient;
when the inventory quantity is sufficient, sending the information of the selected food to the food production department and updating the inventory quantity of the selected food.

4. The method according to claim 1, further comprising:
entering the food selection process when the activated order is in a nonpayment state;
determining whether a cancellation instruction is received when the activated order is in a payment status;
entering the food selection process when the cancellation instruction is received;
entering the order payment process when the cancellation instruction is not received.

5. The method according to claim 1, further comprising:
activating an order payment operation or a food selection operation, when the customer terminal scans an QR code;
selecting at least one food on the customer terminal during the food selection operation;
generating an order containing the selected food;
determining whether the inventory quantity of the food is sufficient;
adding the selected food to the order when the inventory quantity is sufficient;
prohibiting the selected food added to the order and indicating to reselect another food or abandon the selected food, when the inventory quantity is insufficient;
activating the order payment operation for the order;
determining whether the inventory quantity of the food is sufficient after the payment of the order is completed;
when the inventory quantity is insufficient, confirming the order as an overdue order and indicating the selected food is insufficient;
when the inventory quantity is sufficient, sending the information of selected food to the food production department and updating the inventory quantity of the selected food.

6. The method according to claim 1, further comprising:
activating an order payment operation or a food selection operation when the customer terminal scans an QR code;
selecting at least one food on the customer terminal during the food selection operation;
generating an order containing the selected food;
determining whether the inventory quantity of the food is sufficient;
adding the selected food to the order when the inventory quantity is sufficient;
prohibiting the selected food added to the order and indicating to reselect another food or abandon the selected food, when the inventory quantity is insufficient;
sending the information of the selected food to the food production department and updating the inventory quantity of the food.

7. The method according to claim 6, further comprising:
determining whether the order payment process of the same order is executed on the other sales terminal;
waiting for the execution of the order payment process on the sales terminal when the order payment process is executed on the other sales terminal;
determining whether order payment operation is activated on other customer terminals;
selecting the target payment mode on the other customer terminals when the order payment operation is activated on other customer terminals;
selecting the target payment mode on the customer terminals when the order payment operation is not activated on other customer terminals or the other customer terminals do not select the target payment mode within the preset selection time;
completing the payment of the order according to the selected target payment mode.

8. The method according to claim 7, wherein the step of completing the payment of the order according to the selected target payment mode comprises:
converting to a payment page corresponding to a selected payment method; wherein the payment amount of the payment page is the total amount of the order;
activating the order payment operation again, when the payment is not completed within the preset payment processing time;
finishing the order payment operation when the payment is completed within the preset payment processing time;
in response to the order payment operation of the same order is activated on the other customer terminals or sales terminals, confirming the order whose order payment operation has been completed as an overdue order;
refunding the payment amount of the overdue order.

9. The method according to claim 7, wherein the step of completing the payment of the order according to the selected target payment mode comprises:
on the customer terminal, determining a user-defined split or average split of the total amount of the order;
converting to a first payment page corresponding to the selected payment method when the average split is determined, wherein the first payment amount of the payment page is determined by dividing the total amount and average quantity of the order;
converting to a second payment page corresponding to the selected payment method when the user-defined split is determined, wherein the second payment amount of the payment page is an amount set by the user;
activating the order payment operation again, when the payment is not completed within the preset payment processing time;
finishing the order payment operation when the payment is completed within the preset payment processing time;
determining whether the total payment amount exceeds the total amount of the order, after the order payment operation has been completed;
confirming the order as an overdue order and refunding the payment amount of the overdue order when the total payment amount exceeds the total amount of the order.

10. The method according to claim 7, wherein the step of completing the payment of the order according to the selected target payment mode comprises:
determining at least one unpaid food selected by the user;
converting to a payment page corresponding to the selected payment method, wherein the payment amount of the payment page is the total price of the unpaid food selected by the user;
activating the order payment operation again, when the payment is not completed within the preset payment processing time;
finishing the order payment operation when the payment is completed within the preset payment processing time;
determining whether the total payment amount exceeds the total amount of the order, after the order payment operation has been completed;
confirming the order as an overdue order and refunding the payment amount of the overdue order when the total payment amount exceeds the total amount of the order.

11. A system for order processing, comprising:
several sales terminals, configured to activate at least one order to enter a food selection process or an order payment process and select at least one food during the food selection process;
several servers, configured to determine whether an inventory quantity of the food is sufficient; add the food to the order when the inventory quantity is sufficient; prohibit the food added to the order and indicating to reselect the food or abandon the target food when the inventory quantity is not sufficient; enter the order payment process in response to the payment of the order is necessary to complete before food preparation; sending the selected food information to the food production department and update the inventory quantity of the target food, and enter the order payment process when the payment instruction is received, in response to the payment of the order is not necessary to complete before food preparation;
a data base, configured to store the inventory quantity;
a printing device arranged in the food production department, configured to show the received food information.

12. The system according to claim 11, wherein the server further configures to determine whether the inventory quantity of the food is sufficient, after the payment of the order is completed; when the inventory quantity is insufficient, confirm the order as an overdue order and indicating the food of the overdue order is insufficient; when the inventory quantity is sufficient, send the selected food information to the food production department and updating the inventory quantity of the target food;
or
wherein the system further comprises:
several customer terminals, configured to scans an QR code to activate an order payment operation or a food selection operation; and select at least one food on the customer terminal during the food selection operation;
wherein the servers further configure to generate an order containing the selected food; determine whether the inventory quantity of the food is sufficient; add the food to the order when the inventory quantity is sufficient; prohibit the food added to the order and indicating to reselect the food or abandon the target food when the inventory quantity is not sufficient; activate the order payment operation for the order; determine whether the inventory quantity of the food is sufficient after the payment of the order is completed; when the inventory quantity is insufficient, confirm the order as an overdue order and indicating the food of the overdue order is insufficient; when the inventory quantity is sufficient, send the selected food information to the food production department and update the inventory quantity of the food.

13. The system according to claim 11, wherein the system further comprises:
several customer terminals, configured to scans an QR code to activate an order payment operation or a food selection operation; and select at least one food on the customer terminal during the food selection operation;
wherein the servers further configure to generate an order containing the selected food; determine whether the inventory quantity of the food is sufficient; add the food to the order when the inventory quantity is sufficient; prohibit the food added to the order and indicating to reselect the food or abandon the food when the inventory quantity is insufficient; send the selected food information to the food production department and update the inventory quantity of the food.

14. The system according to claim 13, wherein the servers further configure to determine whether the order payment process of the same order is executed on the other sales terminal; wait for the execution of the order payment process on the sales terminal when the order payment process is executed on the other sales terminal; determine whether order payment operation is activated on other customer terminals; select the target payment mode on the other customer terminals when the order payment operation is activated on other customer terminals; select the target payment mode on the customer terminals when the order payment operation is not activated on other customer terminals or the other customer terminals do not select the target payment mode within the preset selection time; complete the payment of the order according to the selected target payment mode.

15. The system according to claim 14, wherein the system further comprises: a third-party payment platform configured to show a payment page corresponding to a selected payment method,
wherein the payment amount of the payment page is the total amount of the order and the servers further configure to activate the order payment operation again, when the payment is not completed within the preset payment processing time, finish the order payment operation when the payment is completed within the preset payment processing time, in response to the order payment operation of the same order is activated on the other customer terminals or sales terminals after the order payment operation has been completed, confirm the order as an overdue order, refund the payment amount of the overdue order;
or
wherein the system further comprises: a third-party payment platform configured to show a first and second payment page corresponding to a selected payment method,
wherein the customer terminal further configures to determine a user-defined split or average split of the total amount of the order according to the user instruction, convert to the first payment page when the average split is determined, wherein the payment amount of the payment page is determined by dividing the total amount and average quantity of the order, convert to the second payment page when the user-defined split is determined, wherein the payment amount of the payment page is an amount set by the user, and
the servers further configure to activate the order payment operation again, when the payment is not completed within the preset payment processing time, finish the order payment operation when the payment is completed within the preset payment processing time, determine whether the total payment amount exceeds the total amount of the order, after the order payment operation has been completed, confirm the order as an overdue order and refunding the payment amount of the overdue order when the total payment amount exceeds the total amount of the order;
or
wherein the system further comprises: a third-party payment platform configured to show a payment page corresponding to a selected payment method,
wherein the customer terminal further configures to determine at least one unpaid food selected by the user; convert to the payment page corresponding to the selected payment method, wherein the payment amount of the payment page is the total price of the unpaid food selected by the user, and
the servers further configure to activate the order payment operation again, when the payment is not completed within the preset payment processing time, finish the order payment operation when the payment is completed within the preset payment processing time, determine whether the total payment amount exceeds the total amount of the order, after the order payment operation has been completed, confirm the order as an overdue order and refunding the payment amount of the overdue order when the total payment amount exceeds the total amount of the order.
